# EUROPÄISCHE PATENTSCHRIFT

(11) **EP 2 252 473 B1**
(45) Veröffentlichungstag und Bekanntmachung des Hinweises auf die Patenterteilung: **09.04.2014**
(21) Anmeldenummer: 09716719.1
(22) Anmeldetag: 11.02.2009
(51) Int. Cl.: B60G 7/00, B62D 7/18

(54) **VERSTELLBARER RADTRÄGER**
ADJUSTABLE WHEEL SUPPORT
SUPPORT DE ROUE RÉGLABLE

(30) Priorität: 07.03.2008 DE 102008013155
(43) Veröffentlichungstag der Anmeldung: 24.11.2010
(73) Patentinhaber: Audi AG, 85045 Ingolstadt (DE)
(72) Erfinder: SCHMID, Wolfgang, 85354 Freising (DE); MÜLLER, Hugo, 86701 Rohrenfels-Ballersdorf (DE)
(74) Vertreter: Asch, Konrad
(86) Internationale Anmeldenummer: PCT/EP2009/000932
(87) Internationale Veröffentlichungsnummer: WO 2009/109280

(56) Entgegenhaltungen:
- EP-A- 1 400 380
- EP-A- 1 655 155
- WO-A-2007/118629
- WO-A-2008/015636
- DE-A1- 10 126 192
- DE-A1- 10 352 338
- DE-A1-102004 055 130
- FR-A- 2 861 335
- GB-A- 2 375 744
- JP-A- 59 199 312

## Beschreibung

Die Erfindung betrifft einen verstellbaren Radträger gemäß der im Oberbegriff des Anspruches 1 angegebenen Art.

Insbesondere betrifft die Erfindung einen verstellbaren Radträger zur Anbindung eines Fahrzeugrades, insbesondere eines Kraftfahrzeugrades, an einem Fahrzeug. Dabei ist der Radträger ein Bauteil einer Radaufhängung, die insbesondere bei Kraftfahrzeugen zum Einsatz kommen kann. Speziell bei der Realisierung von Hinterachslenkungen ist die Gestaltungsfreiheit bei der Achskonstruktion bauraumbedingt eingeschränkt. Ferner sind bisherige Lösungen mit geteilten Radträgern sehr kompliziert aufgebaut und benötigen einen großen Bauraum. Darüber hinaus ist hohes Baugewicht von besonderem Nachteil, da es sich beim Radträger um eine ungefederte Masse handelt.

Eine Radaufhängung, die einen künstlichen Muskel beinhaltet, kann der EP 1 655 155 A1 entnommen werden.

Dabei betrifft die Erfindung eine Radaufhängung, insbesondere zur Verwendung an einem Kraftfahrzeug, mit einem Radträger zur Aufnahme eines Rades. Es soll eine Randaufhängung bereitgestellt werden, bei der mindestens ein Aktuator -künstlicher Muskel - vorgesehen ist, durch dessen Aktivierung das Rad bewegbar ist, das heißt eine Veränderung der Radstellung realisierbar wird.

Die EP 09 24 033 A2 beschreibt ebenfalls einen Aktuator - künstlichen Muskel -, der durch Anlegung einer äußeren Spannung die Form einer Membran verändert. Die US 2 002 00 36 385 A1 und die FR 2 884 795 A1 zeigen jeweils Aktuatoren, die als eine Einheit aus Zylinder und Kolben bestehen. Durch diese Zylinderkolbeneinheit wird ein Radträger indirekt verstellt.

Die gattungsbildende GB-A-2375744 zeigt ein verstellbarer Radträger nach dem Oberbegriff des Anspruchs 1.

Die Aufgabe der Erfindung besteht darin, von den aus dem Stand der Technik bekannten konventionellen Lösungen, nämlich mechanische Freiheitsgrade wie etwa Kugelgelenke oder Scharniere zur Verstellung eines Radträger zu verwenden, weg zukommen, da diese Bauteile zum Einen einen großen Bauraum in Anspruch nehmen und darüber hinaus neben einem enormen Gewicht auch einen enormen Kostenfaktor darstellen.

Die Aufgabe der Erfindung wird durch die Merkmale des Patentanspruches 1 gelöst.

Die Unteransprüche geben dabei eine weitere Ausgestaltung des erfindungsgemäßen Gedankens wieder.

Die Erfindung richtet sich darauf, dass an einem Radträger eine gerichtete, gewollte Materialverformung, durch einen Radträger aus kohlenstofffaserverstärkten Kunststoff (CFK) herzustellen. Eine derartige technische Umsetzung kann mit jeder Art von Radträgern durchgeführt werden. Ein solcher Radträger muss von seiner Struktur so geschaffen sein, dass mindestens ein Bereich an ihm eine Bauteilelastizität zulässt, die den Radträger in seiner Ausrichtung verändern kann.

Um eine gewollte Veränderung der Materialform durch den Bereich der erhöhten Materialelastizität herbeizuführen, kann auf so genannte Aktuatoren zurückgegriffen werden. Hier bieten sich insbesondere künstliche Muskeln an, die den Vorteil gegenüber konventionellen Stellorganen, wie z. B. Hydraulikzylinder haben, dass sie sich in oder an die Struktur anschmiegen können, ähnlich eines menschlichen Muskels.

Künstliche Muskeln sind Aktuatoren, welche in gewisser Weise natürlichen Muskeln ähneln. Dabei können verschiedene Effekte benutzt werden, wie zum Beispiel elektrostatische Anziehungskräfte, ein piezoelektrischer Effekt, Formgedächtnisse von Metallen, Ionenaustausch, Einlagerung von Wasserstoff in Metallhydride oder die Streckung oder das Zusammenziehen von Kohlenstoffnanoröhrchen. Weiterhin bieten sich als künstliche Muskel auch Polymere, Polymergel mit ferroelastischen Substanzen oder Silizium an.

So ist eine Ausführung eines elastischen Radträgers dadurch zu erreichen, dass eine gewollte Abschwächung der Struktur geschaffen wird und darüber hinaus durch den Einsatz eines Aktuators ein Biegen stattfindet. Dabei können derartige Aktuatoren auf dem Bereich des Radträgers angesetzt werden, in dem eine höhere Materialelastizität besteht bzw. ist es auch möglich, diese Aktuatoren innerhalb des Bereiches der höheren Materialelastizität einzusetzen.

Erfindungsgemäss besteht der Träger aus einem kohlenstofffaserverstärkten Kunststoff, der als Faserkunststoffverbundwerkstoff hergestellt wird. Bei einem solchen Radträger werden in einer Matrix zum Beispiel Kunststoffkohlenstofffasern meist in mehreren Lagen als Verstärkung eingebettet und erlauben durch die Eigenschaften der Matrix sowie einer vorbestimmten Ausrichtung der Fasern ein Bauteil zu schaffen, das in einer oder mehreren Richtungen biegeweich ist. Auch hier wird zur Erzeugung der gewollten Biegung auf Aktuatoren zurückgegriffen. Erfindungsgemäss werden derartige Aktuatoren in die Struktur der Matrix mit einlaminiert. Derartige Aktuatoren haben den Vorteil gegenüber konventionellen Stellorganen, dass sie sich in die Struktur einschmiegen. So kann zum Beispiel ein Radträger aus einem kohlenstofffaserverstärktem Kunststoff geformt werden, welcher eine gerichtete Verformung erlaubt und in dem die Aktuatoren als beispielsweise Kohlenstoffnanoröhrchen eingearbeitet sind.

Analog zu einem natürlichen Muskel kann ein künstlicher Muskel in Form eines Aktuators Kontraktionen wie Relaxationen durchführen. Werden diese Eigenschaften gezielt eingesetzt, so kann es zu einer "Verbiegung oder Verschwenkung" des Radträgers kommen.

In einer weiteren bevorzugten Ausführungsform kann ein Radträger geschaffen werden, welcher nicht strukturell durch Materialabtragung geschwächt wird, sondern durch gerichtetes Laminieren eines kohlenstofffaserverstärkten Kunststoffes, beispielsweise in einem Hohlzylinder. Je nach Auftreten der Belastung am Radträger und gewollter Verformung durch die Aktuatoren muss eine derartige Matrixstruktur entsprechend laminiert werden. Dabei werden innerhalb der kohlenstofffaserverstärkten Matrix die Aktuatoren mit einlaminiert, zum Beispiel in Form von Kohlenstoffnanoröhrchen. Derartige Aktuatoren sind dabei über den gesamten Umfang verteilt. Durch gezielte Ansteuerung der Aktuatoren kann eine Kontraktion und Relaxation derselben, je nach gewünschter Biegerichtung, erzeugt werden.

Die Erfindung wird nachfolgend anhand von verschiedenen Ausführungsbeispielen schematisch in den Zeichnungen näher beschrieben.

Hierbei zeigt:
- Figur 1:: Eine schematische Ausschnittzeichnung eines Rades auf einer Fahrbahn mit angesetztem Radträger;
- Figur 2:: eine Draufsicht auf einen Radträger der Figur 1 im ausgebauten Zustand;
- Figur 3:: eine Ausführungsform eines Bereiches eines Radträgers in der Grundstellung;
- Figur 4:: wie Figur 3, jedoch in einer verschwenkten Position;
- Figur 5:: eine Ausführungsform eines Bereiches eines Radträgers mit integrierten Aktuatoren;
- Figur 6:: eine erfindungsgemässe Ausführungsform eines Radträgers oder eines Teiles eines Radträgers besteht aus einem kohlenstofffaserverstärktem Kunststoff, als Hohlprofil ausgebildet.

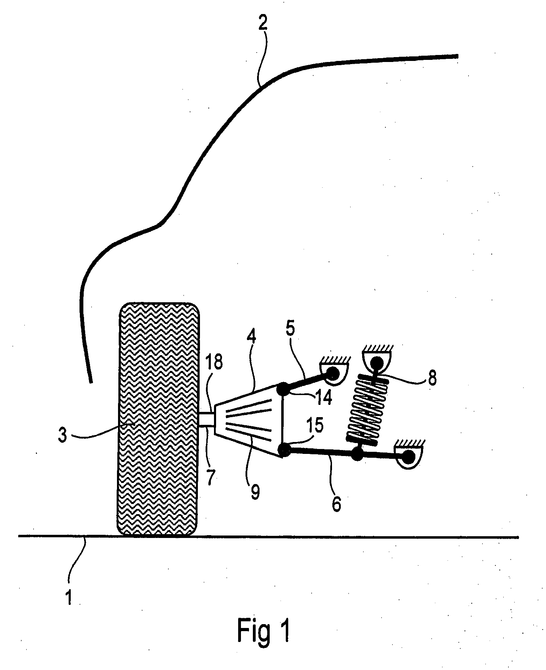

In der Figur 1 wird unterhalb einer mit 2 bezeichneten, schematisch angedeuteten Karosserie eines Kraftfahrzeuges ein Fahrzeugrad 3 wiedergegeben, das auf einer Fahrbahn 1 steht. Das Fahrzeugrad 3 ist mittels einer Achse 7 an einem Radträger 4 angeschlossen. Der Radträger 4 ist mittels einer Befestigung 14 eines Fahrwerklenkers 5 an der Karosserie, die nicht näher bezeichnet ist, befestigt. Ferner ist der Radträger 4 über eine Befestigung 15 an einem weiteren Fahrwerkslenker 6 befestigt, der ebenfalls andererends an der Karosserie angebunden ist. An dem Fahrwerkslenker 6 befindet sich darüber hinaus ein Federbein 8.

Der Radträger 4 ist in diesem nicht erfindungsgemässen Ausführungsbeispiel der Figur 1 als konisches Bauteil dargestellt, das von Aktuatoren 9 durchsetzt ist bzw. auf seiner Oberfläche angebracht hat.

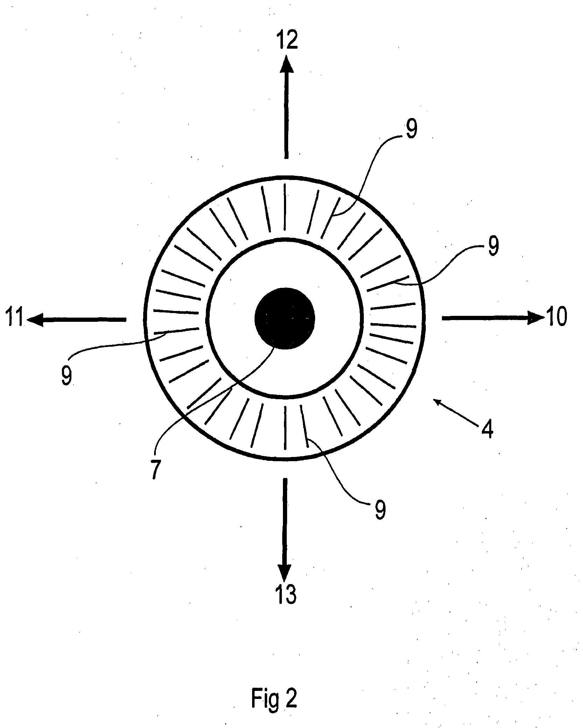

Den Aktuator 9 in einer Draufsicht zeigt die Figur 2. Hierbei werden die auf dem Umfang des Radträgers 4 vorhandenen Aktuatoren 9 sichtbar. Ferner sind durch die Pfeile die Verformungsrichtungen 10, 11, 12 und 13, in denen sich der Radträger 4 verformen kann, angegeben worden.

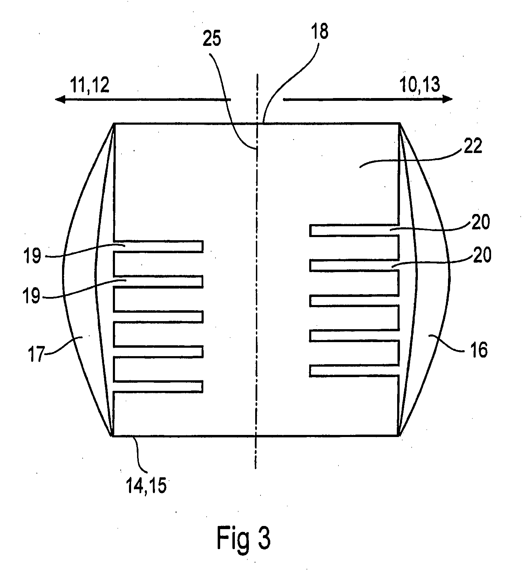

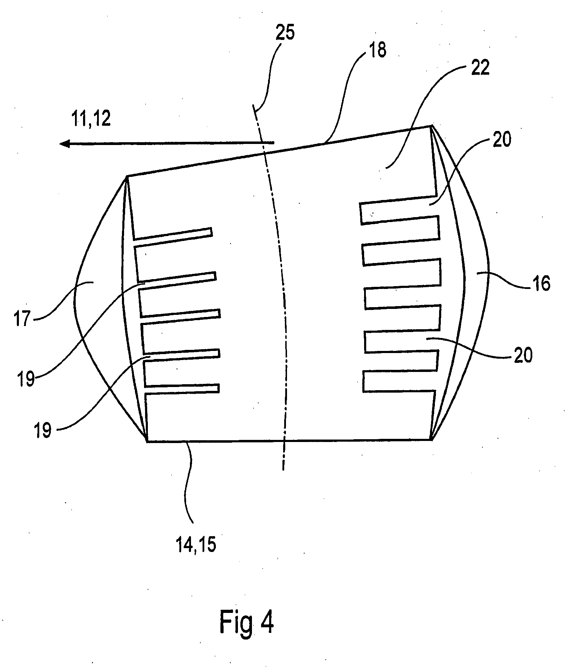

Die Figuren 3 und 4 geben eine weitere nicht erfindungsgemässe Ausführungsform eines Radträgers 22 wieder. Der Radträger 22 ist nur in einer Ausschnittdarstellung, nämlich in dem Bereich wiedergegeben, in dem eine höhere Materialelastizität des Radträgers 22 vorhanden ist. Eine derartige höhere Materialelastizität wird in diesem Falle dadurch erzielt, dass diametral gegenüber einer Achsrichtung 25 auf jeder Seite des vorzugsweise als Zylinder ausgebildeten Bereiches der höheren Materialelastizität des Radträgers 22 Einschnitte 19 und 20 vorhanden sind. Durch diese schlitzförmigen Einschnitte oder Aussparungen quer zur Drehrichtung wird eine gezielte Materialschwächung und damit eine höhere Materialelastizität erzeugt.

Außen auf dem Radträger 22 sind im Bereich der Einschnitte 19 und 20 jeweils Aktuatoren 16 und 17 angebracht. Es versteht sich, dass hier die Anzahl der Aktuatoren in größerer Anzahl vorhanden sein kann.

Die Auswirkung der Aktuatoren, so sie gezielt eingesetzt werden, kann der Figur 4 entnommen werden. Dabei ist der Aktuator 16 so angesteuert worden, dass die Einschnitte 20 sich vergrößern und auf der gegenüber liegenden Seite ist der Aktuator 17 so angesteuert worden, dass ein Zusammenziehen der Einschnitte 19 erfolgt. Bildlich gesprochen kann hier von einer Kontraktion des Aktuators 17 und einer von Relaxation des Aktuators 16 gesprochen werden, was gleichzeitig in dem Bereich des Radträgers 22, aufgrund der Einschnitte 19 und 20 eine Verformung der Achse 25 mit sich bringt. An der Oberseite des Aktuators 22 ist eine Achsbefestigung 18, an der das, in diesem Falle nicht dargestellte, Fahrzeugrad über die entsprechende Achse angeschlossen ist.

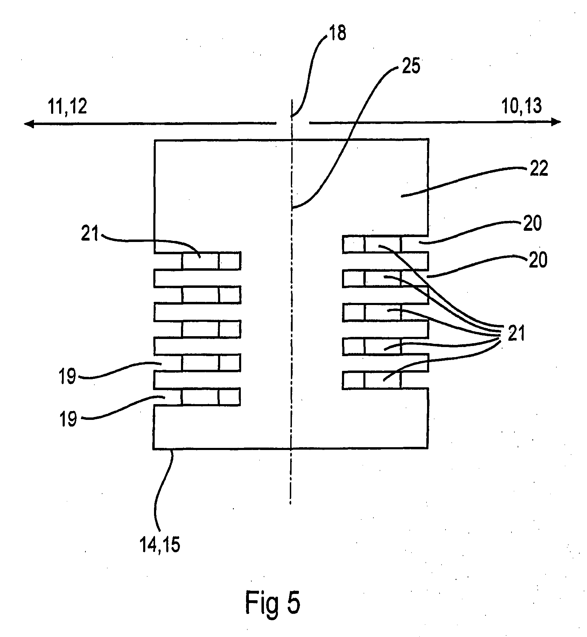

In einer weiteren nicht erfindungsgemässen Ausführungsform wird in der Figur 5 ein Ausführungsbeispiel des Radträgers 22 dargestellt, bei dem innerhalb der Einschnitte 19 und 20 Aktuatoren 21 eingesetzt sind. Durch die Einbringung der Aktuatoren 21 in jedem der Einschnitte 19 und 20 kann durch eine Dickenänderung der Aktuatoren eine Dehnung und Stauchung in den entsprechenden Bereichen erzielt werden, was zu einer Richtungsänderung der Achsrichtung 25 in die Verformungsrichtungen 11, 12 oder 10,13 führen würde.

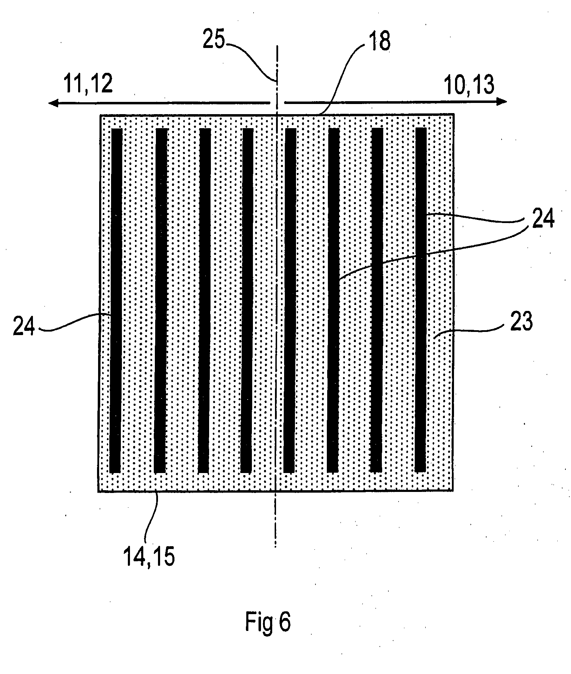

Die Figur 6 zeigt in einem erfindungsgemässen Ausführungsbeispiel einen Radträger 23, der aus einem kohlenstofffaserverstärktem Kunststoff, vorzugsweise als Hohlzylinder, gefertigt ist. Dieser Radträger 23 wird nicht durch eine Materialschwächung, sondern durch gerichtetes Laminieren des kohlenstofffaserverstärkten Kunststoffes in einer Trägerstruktur erzeugt. Je nach auftretender Belastung am Radträger 23 und gewollter Verformung durch, in den Radträger 23 einlaminierter Aktuatoren 24 kann diese Matrixstruktur laminiert werden. Dabei werden die Aktuatoren 24 gleichzeitig innerhalb der Matrixstruktur eingearbeitet. In einem solchen Fall hat sich als Aktuator der Wahl beispielsweise ein Kohlenstoffnanoröhrchen gezeigt. Durch Kontraktion und Relaxation des Kohlenstoffnanoröhrchens wird somit eine Schwenkbewegung der Achsrichtung 25 bewirkt.

Grundsätzlich ist bei allen vor beschriebenen Ausführungsbeispielen das Funktionsprinzip gleich. Der Radträger wird entweder durch dünnere Wandstärken oder Einfräsungen oder durch gerichtetes Laminieren in den gewollten Bewegungsrichtungen gestärkt oder geschwächt und über Aktuatoren betätigt. Es versteht sich, dass auch derartige Aktuatoren Hydraulikzylinder oder elektrische Linearsteller sein können. Jedoch hat es sich gezeigt, dass insbesondere elektrostatische Anziehungskräfte oder piezoelektrische Effekte oder Formgedächtnismaterialien oder Ionenaustausch oder Einlagerung von Wasserstoff in Metallhydride oder die Streckung von Kohlenstoffnanoröhrchen als Aktuatoren der ersten Wahl in Anspruch kommen. Es können jedoch auch Polymere oder Polymergele mit ferroelastischen Substanzen oder Silizium eingesetzt werden.

### Bezugszeichenliste

- 1.: Fahrbahn
- 2.: Karosserie
- 3.: Fahrzeugrad
- 4.: Radträger
- 5.: Fahrwerklenker
- 6.: Fahrwerklenker
- 7.: Achse
- 8.: Federbein
- 9.: Aktuator
- 10.: Verformungsrichtung
- 11.: Verformungsrichtung
- 12.: Verformungsrichtung
- 13.: Verformungsrichtung
- 14.: Befestigung Fahrwerkslenker
- 15.: Befestigung Fahrwerkslenker
- 16.: Aktuator
- 17.: Aktuator
- 18.: Achsenbefestigung
- 19.: Einschnitt
- 20.: Einschnitt
- 21.: Aktuator
- 22.: Radträger
- 23.: Radträger
- 24.: Aktuator
- 25.: Achsrichtung

## Patentansprüche

1. Verstellbarer Radträger (23) zur Anbindung eines Fahrzeugrades (3) an einem Fahrwerk eines Kraftfahrzeuges, wobei der Radträger (23) aus einem kohlestofffaserverstärktem Kunststoff besteht, der durch eine gerichtete Laminierung in Form einer Matrix den Radträger (23) ergibt und der zumindest in einem Bereich in einer oder mehreren Richtungen biegeelastisch ausgeführt ist, **dadurch gekennzeichnet, dass** in der Matrixstruktur Aktuatoren (24) einlaminiert sind.

2. Radträger nach Anspruch 1, **dadurch gekennzeichnet, dass** auf dem Umfang des Radträgers (23) auf der Matrixstruktur Aktuatoren (24) aufgesetzt sind.

3. Radträger nach Anspruch 1 oder 2, **dadurch gekennzeichnet, dass** der Radträger (23) zumindest bereichsweise als Hohlkörper ausgebildet ist.

4. Radträger nach einem der Ansprüche 1 bis 3, **dadurch gekennzeichnet, dass** der Radträger (23) als Hohlkörper ausgebildet ist.

5. Radträger nach einem der vorgehenden Ansprüche, **dadurch gekennzeichnet, dass** der Radträger (4, 22, 23) aus unterschiedlichen Materialien besteht.

6. Radträger nach einem der vorgehenden Ansprüche, **dadurch gekennzeichnet, dass** die Aktuatoren (9, 16, 17, 21, 24) künstliche Muskeln sind.

7. Radträger nach einem der vorgehenden Ansprüche, **dadurch gekennzeichnet, dass** der Aktuator (9, 16, 17, 21, 24) ein Kohlenstoffnanoröhrchen oder ein elektroaktives Polymer oder ein Piezokristall oder ein Formgedächtniswerkstoff oder durch Einlagerung von Wasserstoff in Metallhydride oder ein Polymergel mit ferroelastischen Substanzen oder Silizium ist.

8. Radträger nach einem der vorgehenden Ansprüche, **dadurch gekennzeichnet, dass** der Aktuator (9, 16, 17, 21, 24) ein Hydraulikzylinder oder ein elektrischer Linearsteller ist.

9. Radträger nach einem der vorgehenden Ansprüche, **dadurch gekennzeichnet, dass** an dem Radträger (4, 22, 23) Aktuatoren (9, 16, 17, 21, 24) in mehrfacher Anzahl vorhanden sind.

10. Radträger nach einem der vorgehenden Ansprüche, **dadurch gekennzeichnet, dass** durch die Ansteuerung der Aktuatoren (9, 16, 17, 21, 24) eine Änderung der Radstellung über die Radträger (4, 22, 23) möglich ist.

11. Radträger nach einem der vorgehenden Ansprüche, **dadurch gekennzeichnet, dass** der Aktuator (9, 16, 17, 21, 24) eine Kontraktion oder eine Expansion ausführt.

12. Radträger nach einem der vorgehenden Ansprüche, **dadurch gekennzeichnet, dass** der Aktuator (9, 16, 17, 21, 24) eine Dickenänderung/Querschnitts-änderung ausführt.

13. Radträger nach einem der vorgehenden Ansprüche, **dadurch gekennzeichnet, dass** die Aktuatoren (9, 16, 17, 21, 24) in Stufen oder stufenlos ansteuerbar sind.

14. Radträger nach einem der vorgehenden Ansprüche, **dadurch gekennzeichnet, dass** die Aktuatoren (9, 16, 17, 21, 24) mit elektrischer Energie über das Bordnetz des Kraftfahrzeuges versorgt werden.

## Claims

1. Adjustable wheel carrier (23) for connecting a vehicle wheel (3) to a running gear of a motor vehicle, the wheel carrier (23) consisting of a carbon-fibre-reinforced plastics material which yields the wheel carrier (23) by means of directional lamination in the form of a matrix, and at least one region of whichplastics material isconfigured to be flexible in one or more directions, **characterised in that** actuators (24) are laminated in the matrix structure.

2. Wheel carrier according to claim 1, **characterised in that** actuators (24) are attached to the matrix structure on the periphery of the wheel carrier (23).

3. Wheel carrier according to either claim 1 or claim 2, **characterised in that** the wheel carrier (23) is configured at least in regions as a hollow body.

4. Wheel carrier according to any of claims 1 to 3, **characterised in that** the wheel carrier (23) is configured as a hollow body.

5. Wheel carrier according to any of the preceding claims, **characterised in that** the wheel carrier (4, 22, 23) consists of various materials.

6. Wheel carrier according to any of the preceding claims, **characterised in that** the actuators (9, 16, 17, 21, 24) are artificial muscles.

7. Wheel carrier according to any of the preceding claims, **characterised in that** the actuator (9, 16, 17, 21, 24) is a carbon nanotube or an electroactive polymer or a piezoelectric crystal or a shape-memory material or by incorporating hydrogen in metal hydrides or a polymer gel comprising ferroelastic substances or silicon.

8. Wheel carrier according to any of the preceding claims, **characterised in that** the actuator (9, 16, 17, 21, 24) is a hydraulic cylinder or an electric linear actuator.

9. Wheel carrier according to any of the preceding claims, **characterised in that** a plurality of actuators (9, 16, 17, 21, 24) are present on the wheel carrier (4, 22, 23).

10. Wheel carrier according to any of the preceding claims, **characterised in that** the position of the wheel can be changed via the wheel carriers (4, 22, 23) by controlling the actuators (9, 16, 17, 21, 24).

11. Wheel carrier according to any of the preceding claims, **characterised in that** the actuator (9, 16, 17, 21, 24) carries out a contraction or an expansion.

12. Wheel carrier according to any of the preceding claims, **characterised in that** the actuator (9, 16, 17, 21, 24) carries out a change in thickness/cross section.

13. Wheel carrier according to any of the preceding claims, **characterised in that** the actuators (9, 16, 17, 21, 24) can be controlled in stages or continuously.

14. Wheel carrier according to any of the preceding claims, **characterised in that** the actuators (9, 16, 17, 21, 24) are supplied with electrical energy via the on-board power supply of the motor vehicle.

## Revendications

1. Support de roue réglable (23) pour fixer une roue de véhicule (3) à un châssis d'un véhicule automobile, le support de roue (23) étant en une matière plastique, renforcée par des fibres de carbone, qui forme le support de roue (23) grâce à un laminage orienté sous la forme d'une matrice et qui, au moins dans une zone, est réalisée élastique en flexion dans une ou plusieurs directions, **caractérisé en ce que** des actionneurs (24) sont intégrés par laminage dans la structure de matrice.

2. Support de roue selon la revendication 1, **caractérisé en ce que** des actionneurs (24) sont posés sur la structure de matrice sur le pourtour du support de roue (23).

3. Support de roue selon la revendication 1 ou 2, **caractérisé en ce que** le support de roue (23) est conçu au moins par zones sous forme de corps creux.

4. Support de roue selon l'une des revendications 1 à 3, **caractérisé en ce que** le support de roue (23) est conçu sous forme de corps creux.

5. Support de roue selon l'une des revendications précédentes, **caractérisé en ce que** le support de roue (4, 22, 23) est constitué de différents matériaux.

6. Support de roue selon l'une des revendications précédentes, **caractérisé en ce que** les actionneurs (9, 16, 17, 21, 24) sont des muscles artificiels.

7. Support de roue selon l'une des revendications précédentes, **caractérisé en ce que** l'actionneur (9, 16, 17, 21, 24) est un nanotube de carbone ou un polymère électroactif ou un cristal piézoélectrique ou un matériau à mémoire de forme ou par inclusion d'hydrogène dans un hybride métallique ou un gel de polymère avec des substances ferro-élastiques ou du silicium.

8. Support de roue selon l'une des revendications précédentes, **caractérisé en ce que** l'actionneur (9, 16, 17, 21, 24) est un cylindre hydraulique ou un vérin linéaire électrique.

9. Support de roue selon l'une des revendications précédentes, **caractérisé en ce que** plusieurs actionneurs (9, 16, 17, 21, 24) sont prévus sur le support de roue (4, 22, 23).

10. Support de roue selon l'une des revendications précédentes, **caractérisé en ce que**, grâce à la commande des actionneurs (9, 16, 17, 21, 24), une modification de la position de roue est possible par l'intermédiaire des supports de roue (4, 22, 23).

11. Support de roue selon l'une des revendications précédentes, **caractérisé en ce que** l'actionneur (9, 16, 17, 21, 24) réalise une contraction ou une expansion.

12. Support de roue selon l'une des revendications précédentes, **caractérisé en ce que** l'actionneur (9, 16, 17, 21, 24) réalise une modification d'épaisseur ou une modification de section transversale.

13. Support de roue selon l'une des revendications précédentes, **caractérisé en ce que** les actionneurs (9, 16, 17, 21, 24) peuvent être commandés par paliers ou de manière continue.

14. Support de roue selon l'une des revendications précédentes, **caractérisé en ce que** les actionneurs (9, 16, 17, 21, 24) sont alimentés en énergie électrique par l'intermédiaire du réseau de bord du véhicule automobile.
